(19) Europäisches Patentamt
European Patent Office
Office européen des brevets

(11) EP 1 659 304 A1

# (12) EUROPÄISCHE PATENTANMELDUNG

(43) Veröffentlichungstag:
**24.05.2006 Patentblatt 2006/21**

(51) Int Cl.:
***F16C 19/18*** *(2006.01)* ***B60B 27/00*** *(2006.01)*

(21) Anmeldenummer: **05004778.6**

(22) Anmeldetag: **04.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **18.11.2004 DE 102004055786**

(71) Anmelder: **FAG Kugelfischer AG & Co. OHG
97421 Schweinfurt (DE)**

(72) Erfinder:
- **Niebling, Peter
97688 Bad Kissingen (DE)**
- **Masur, Ernst
97508 Untereuerheim (DE)**
- **Ruoff, Gottfried
97464 Oberwerrn (DE)**

## (54) Radlagereinheit

(57) Die Erfindung betrifft eine Radlagereinheit (1,4) mit wenigstens einem Außenteil (8,21), mit zumindest einem Innenteil (10) und mit wenigstens zwei Reihen Wälzkörpern (11) zwischen dem Außenteil (8,21) und dem Innenteil, wobei an dem Außenteil (8,21) jeweils zumindest eine Innenlaufbahn (15,16) sowie an dem Innenteil (10) jeweils wenigstens eine Außenlaufbahn (13,14) für die Wälzkörper (11) einer Reihe ausgebildet ist, und das Verhältnis von Durchmesser des Teilkreises ($T_K$) zumindest einer Reihe der Radlagereinheit zum Durchmesser ($d_K$) der Wälzkörper der jeweiligen Reihe größer als sechs ist.

1
17
$b_L$
11
$r_L$
15
$P_1$
16
8
12
11
9
$q_L$
13
14
$d_K$
$D_A$
$d_Z$
$d_L$
$T_K$
6,10
7,10
$\alpha_0$
1a
3
2
E
$P_2$

Fig. 2



Printed by Jouve, 75001 PARIS (FR)

## Beschreibung

### Gebiet der Erfindung

Die Erfindung betrifft eine Radlagereinheit mit wenigstens einem Außenteil, zumindest einem Innenteil und mit wenigstens zwei Reihen Wälzkörpern zwischen dem Außenteil und dem Innenteil, wobei an dem Außenteil jeweils zumindest eine Innenlaufbahn sowie an dem Innenteil jeweils wenigstens eine Außenlaufbahn für die Wälzkörper einer Reihe ausgebildet ist.

### Hintergrund der Erfindung

Bekannte Radlagereinheiten haben ein relativ hohes Gewicht und eine relativ geringe Lagersteifigkeit. Die Lagersteifigkeit ist dabei der Widerstand, den die Einheit gegen durch Belastungen hervorgerufene elastische Auslenkungen aufbringt. Aus der Lagersteifigkeit resultier eine Kippsteifigkeit, die sich aus dem Verhältnis von Momenten aus Belastungen zu dem Kippwinkel im Lager, z.B. in Nm/°, ergibt. Diese ist umso geringer, um so mehr das Lager bei Belastungen verkippt, d.h. umso größer der Kippwinkel bei gleicher

Belastung ist. Die Belastungen sind die Belastungen, die im wesentlichen im Betriebszustand eines Fahrzeuges auf ein Fahrzeugrad und die dazugehörigen Radaufhängung wirken. Je geringer die Lagersteifigkeit, umso mehr bewirken die Belastungen Verkippungen des Radsystems, die sich nachteilig auf das Fahrverhalten des Fahrzeuges, insbesondere bei Kurvenfahrt, und nachteilig auf den Verschleiß der Bremse und die Funktion der Bremse auswirken.

### Zusammenfassung der Erfindung

Die Aufgabe der Erfindung ist es daher, eine Radlagereinheit mit einer hohen Lagersteifigkeit zu schaffen,

Die Aufgabe wurde mit dem Gegenstand des kennzeichnenden Teiles des Anspruches 1 dadurch gelöst, dass das Verhältnis von Durchmesser $T_K$ Teilkreis einer Reihe Wälzkörper der Radlagereinheit zum Durchmesser $d_K$ der Wälzkörper größer als der Zahlenwert 6 ist. Somit ist:

$$T_K > 6 \cdot d_K$$

zu folgenden Randbedingungen:

- Der Teilkreis ist der gedachte Kreis, dessen Mittelpunkt senkrecht von der Rotationsachse der Radlagereinheit durchstoßen ist, und der die Zentren der Wälzkörper einer Reihe umfangsseitig schneidet bzw. miteinander verbindet.

- Das Verhältnis gilt bei Radlagereinheiten, bei denen sich die Durchmesser der Teilkreise von Reihe zu Reihe unterscheiden, für die Reihe mit dem kleinsten Teilkreisdurchmesser.

- Das Verhältnis gilt für Radlagereinheiten, bei denen die Durchmesser der Teilkreise von Reihe zu Reihe gleich sind, sich jedoch die Durchmesser der Wälzkörper von Reihe zu Reihe unterscheiden, für die Reihe, deren Wälzkörper den größten Durchmesser aufweisen.

- Das Verhältnis gilt für Radlagereinheiten zur Lagerung von nicht angetriebenen oder angetriebenen Rädern. Angetriebene Räder sind z.B. mit dem Gelenkaußenteil eines Gleichlaufgelenks gekoppelt, wie gelenkte Räder an Fahrzeugen mit Frontantrieb oder angetriebene Räder an Hinterachskonstruktionen.

- Das Verhältnis gilt für einreihige, insbesondere zweireihige und mehrreihige Kugel- oder Rollenlager, insbesondere für Kugellager, von denen in der Regel das Innenteil mit dem Fahrzeugrad verbunden und das Außenteil fahrzeugseitig über Radträger bzw. Achsschenkel fest ist.

- Das Innenteil ist mindestens ein Innenring mit mindestens einer der Laufbahnen, ist wahlweise zwei Innenringe in einer Einheit mit einer Nabe o.ä., auf der der Innenring sitzt , oder

- das Innenteil ist eine Nabe o.ä. an der zumindest eine der Laufbahnen direkt, und somit ohne Zwischenschaltung eines Innenringes, ausgebildet ist

- Das Außenteil ist mindestens ein Außenring, der zu einer Einheit mit einem Außengehäuse montiert ist. Das Außengehäuse ist beispielsweise ein Radträger und weist Befestigungselemente zur fahrzeugseitigen Befestigung auf, oder

- das Außenteil ist das Außengehäuse und weist mindestens eine der Laufbahnen auf, und ist somit ohne Zwischenschaltung eines Außenringes ausgebildet.

Mit der Wahl des Verhältnisses wird von der in der Fachwelt vorherrschenden Meinung abgewichen, dass die Abmessungen von Radlagereinheiten möglichst klein gewählt werden müssen. Durch den größeren Wälzkörperteilkreis ergibt sich bei gleicher statischer Tragzahl $C_0$ gegenüber einem Lager des Standes der Technik aus

$$C_0 = f_0 \cdot i \cdot z \cdot d_K^2 \cdot \cos \alpha_0$$

eine größere Anzahl Kugeln pro Reihe des erfindungsgemäßen Lagers, insbesondere dann, wenn der Kugeldurchmesser $d_K$ so klein wie möglich gewählt wird. Es sind

$f_0$ = von der Lagerbauart abhängiger Faktor
i = Anzahl der Reihen Wälzkörper
$\alpha_0$ = Lagerdruckwinkel
z = Anzahl der Wälzkörper.

Die Steifigkeit ist von Faktoren wie dem Elastizitätsmodul des Wälzlagermaterials, der Schmiegung der Laufbahn und im hohen Maße von der Anzahl der Wälzkörper sowie von dem Durchmesser der Wälzkörper abhängig. So ergibt sich beispielsweise für ein Lager mit einem Durchmesser des Teilkreises von $T_K$ = 64 bis 65 mm und für z = 14 Wälzkörper mit $d_K$ = 12,7 mm in einem Lager nach dem Stand der Technik eine geringere Steifigkeit als eine vorteilhaft höhere Steifigkeit, die sich für die erfindungsgemäße Radlagereinheit mit gleichem Teilkreisdurchmesser und für z = 21 mit $d_K$ = 11,112 mm ergibt.

Die Lagersteifigkeit, die sich durch die Erfindung um ca. 40% gegenüber dem Stand der Technik deutlich erhöht, führt zur erhöhten Lagerkippsteifigkeit. Die erhöhte Lagerkippsteifigkeit führt zu geringeren belastungsabhängigen Verformungen an der Radlagereinheit und somit zu geringeren Verformungen an den Bremsscheiben.

Eine Ausgestaltung der Erfindung sieht vor, dass der Reihenabstand $r_L$ zwischen zwei axial zueinander benachbarten Reihen (der axiale Mittenabstand von Mitte Wälzkörper zu Mitte Wälzkörper) mindestens dem 1,22 - fachen des Durchmessers $d_k$ der Wälzkörper entspricht. Somit ist

$$r_L > = 1{,}22 \cdot d_k$$

Weiter ist vorgesehen, dass die axiale Lagerbreite $b_L$ des Außenteils mindestens dem Dreifachen des Durchmessers des kleinsten tragenden Wälzkörpers der Radlagereinheit ist. Somit ist:

$$b_L > = 3 \cdot d_k$$

zu folgenden Randbedingungen:

- Die axiale Lagerbreite des Außenteiles ist durch den größten mit der Rotationsachse gleichgerichteten und zur Rotationsachse parallelen Abstand zwischen den zwei am weitesten in die gleiche Richtung voneinander entfernten Punkten der Außenkontur des Außenteiles ausgebildet, wobei Punkte vorzugsweise an den voneinander abgewandten und zumeist ringförmig ausgebildeten Stirnseiten des Außenringes ausgebildet sind.
- Die axiale Lagerbreite des Außenteiles kann größer oder kleiner als die des Innenteils sein.

Schließlich ist mit einer Ausgestaltung der Erfindung vorgesehen, dass der Lagerquerschnitt $q_L$ mindestens dem 1,5 fachen des Durchmessers der kleinsten Wälzkörper der Radlagereinheit entspricht. Somit ist:

$$q_L > = 1{,}5\ d_k$$

zu folgenden Randbedingungen:

- Der Lagerquerschnitt ist durch den radialen Abstand zwischen der Lagerbohrung, beschrieben mit dem Innendurchmesser $d_L$ (freier Innendurchmesser des Innenteils), und durch den Durchmesser $D_A$ des Außenteils oder bei einem nicht rotationssymmetrischen Außenteil, durch den kleinsten radialen Abstand $D_A$ von zwei sich an der Rotationsachse einander gegenüberliegen Punkten $P_1$ und $P_2$ der Außenkontur des Außenteils bestimmt und ergibt sich aus

$$2q_L = D_A - d_L$$

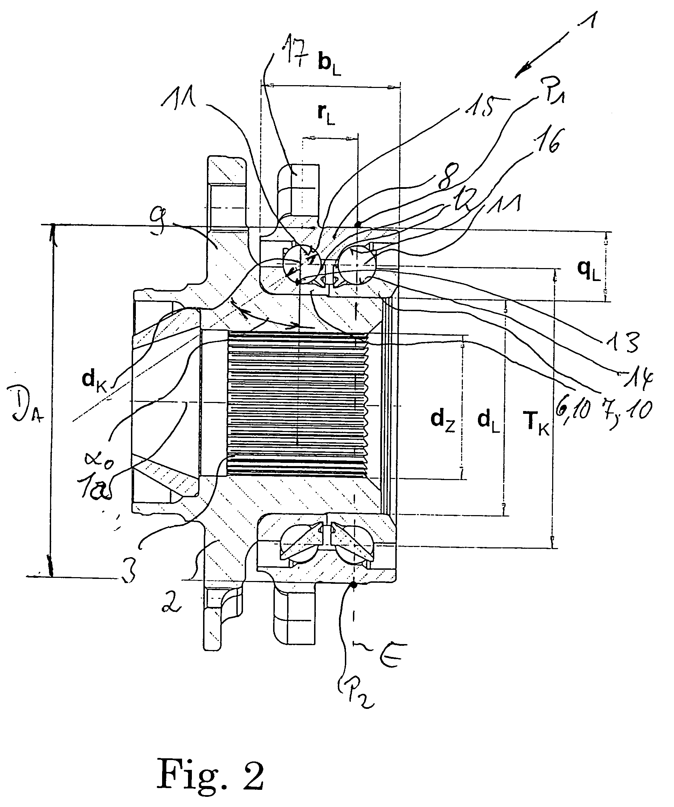

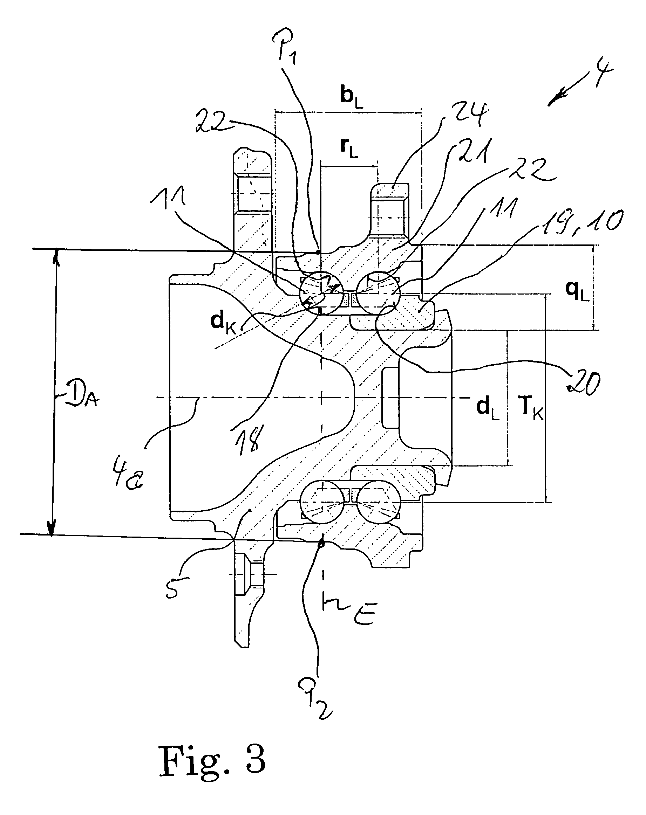

Die Punkte $P_1$ und $P_2$ liegen dabei in einer gemeinsamen durch die Zentren der Wälzkörper einer der Reihen verlaufenden Radialebene E. Die Radialebene E verläuft durch die Reihe, über der der kleinste radiale Abstand $D_A$ ausgebildet ist. In den Beispielen nach Figur 2 und 3 ist dies für die Radlagereinheit 1 nach Figur 2 die in der Zeichnung rechte und für die Radlagereinheit 4 nach Figur 3 die im Bild linke Reihe.

Eine weitere Ausgestaltung der Erfindung sieht für eine Radlagereinheit mit einer Radnabe vor, dass der Durchmesser $d_z$ des Kopfkreises der Innenverzahnung mindestens der Abmessung der axialen Lagerbreite des Außenteiles entspricht. Somit ist:

$$d_Z > = 1 \cdot b_L$$

zu folgenden Randbedingungen:

- Definition der axialen Lagerbreite siehe oben;
- Die Radnabe weist eine radial nach innen in Richtung der Rotationsachse hervorstehende Innenverzahnung auf. Die Innenverzahnung ist für einen Eingriff in eine Außenverzahnung eines Antriebszapfens o.ä. vorgesehen. Die Radnabe ist rotationsfest mit der Außenlaufbahn zumindest gekoppelt, d.h. entweder die Radnabe ist das Innenteil selbst und weist dann mindestens eine der Laufbahnen auf oder wenigstens ein Innenring sitzt als Innenteil auf der Radnabe.

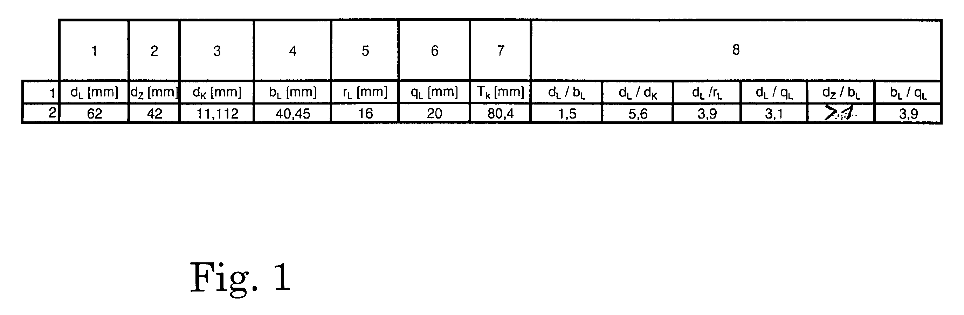

Weitere Ausgestaltungen der Erfindung ergeben sich durch die Verhältnisse in Spalte 8 nach Figur 1, angegeben als Mindestwerte, die bis zu dem Zeitpunkt, an dem die Erfindung gemacht wurde, an Radlagereinheiten des Standes der Technik nicht verwirklicht sind. Die Werte sind Beispiele, die sich aus den in den Spalten 1 bis 7 nach Zeile 2 festgelegten und in Zeile 1 benannten Kenngrößen eines Ausführungsbeispieles der Erfindung ergeben.

## Beschreibung der Zeichnungen

Figur 2 zeigt ein Ausführungsbeispiel der Erfindung, bei dem eine Radlagereinheit 1 eine Radnabe 2 mit einer Innenverzahnung 3 aufweist, mit Angabe der für die Erfindung wesentlichen Kenngrößen. Figur 3 zeigt ein weiteres Ausführungsbeispiel einer Radlagereinheit 4 mit einer Radnabe 5 und mit Angabe der für die Erfindung wesentlichen Kenngrößen. Alle Darstellungen sind in einem Längsschnitt entlang der Rotationsachsen 1a bzw. 4a der Radlagereinheiten 1 bzw. 4 und nicht maßstäblich.

Die Innenverzahnung 3 an der Radnabe 2 ist für den Eingriff in eine Außenverzahnung eines nicht dargestellten Antriebszapfens vorgesehen. Die Radnabe 2 ist drehbar in dem Außenteil 8 gelagert und weist einen Flansch 9 für das Befestigen eines nicht dargestellten Fahrzeugrades und einer Bremsscheibe auf. Auf der Radnabe 2 sitzen die Innenteile 10 in Form von Innenringen 6 und 7, die jeweils eine Außenlaufbahn 13 bzw. 14 für den Wälzkontakt mit jeweils einer Reihe Wälzkörpern 11 in Form von Kugeln aufweisen. Die Wälzkörper 11 einer Reihe sind in einem Käfig 12 geführt. Das Außenteil 8 ersetzt als Flanschkörper den oder die klassischen Außenringe und weist dazu die Innenlaufbahnen 15 bzw. 16 für den Wälzkontakt mit den Wälzkörpern 11 auf. Das Außenteil 8 ist mit einem Flansch 17 zur fahrzeugseitigen Befestigung der Radlagereinheit 1 versehen.

Die Radlagereinheit 4 für nicht angetriebene Räder weist eine Radnabe 5 auf, an der eine Innenlaufbahn 18 für eine Reihe der Wälzkörper 11 ausgebildet ist. Auf der Radnabe 5 sitzt ein Innenring 19 als Innenteil 10, der eine weitere Innenlaufbahn 20 für weitere Wälzkörper 11 aufweist. Das Außenteil 21 der Radlagereinheit 4 ist einteilig mit den Innenlaufbahnen 22 und 23 ausgebildet und weist einen Flansch 24 zur fahrzeugseitigen Befestigung auf.

## Bezugszeichen

| | |
|---|---|
| 1 | Radlagereinheit |
| 1 a | Rotationsachse |
| 2 | Radnabe |
| 3 | Innenverzahnung |
| 4 | Radlagereinheit |
| 4a | Rotationsachse |
| 5 | Radnabe |
| 6 | Innenring |
| 7 | Innenring |
| 8 | Außenteil |
| 9 | Flansch |
| 10 | Innenteil |
| 11 | Wälzkörper |
| 12 | Käfig |
| 13 | Außenlaufbahn |
| 14 | Außenlaufbahn |
| 15 | Innenlaufbahn |
| 16 | Innenlaufbahn |
| 17 | Flansch |
| 18 | Innenlaufbahn |
| 19 | Innenring |
| 20 | Innenlaufbahn |
| 21 | Außenteil |
| 22 | Innenlaufbahn |
| 23 | Innenlaufbahn |
| 24 | Flansch |
| $\alpha_0$ | Lagerdruckwinkel |
| $b_L$ | Lagerbreite |
| $D_A$ | radialer Abstand |
| $d_k$ | Durchmesser Wälzkörper |
| $d_L$ | Innendurchmesser Innenteil |
| dz | Durchmesser Kopfkreis |
| $q_L$ | Lagerquerschnitt |
| E | Radialebene |
| $P_1$ | Punkt der Außenkontur |
| $P_2$ | Punkt der Außenkontur |
| $r_L$ | Reihenabstand |
| $T_K$ | Durchmesser Teilkreis |

## Patentansprüche

**1.** Radlagereinheit (1, 4) mit wenigstens einem Außenteil (8, 21), mit zumindest einem Innenteil (10) und mit wenigstens zwei Reihen Wälzkörpern (11) zwischen dem Außenteil (8, 21) und dem Innenteil, wobei an dem Außenteil (8, 21) jeweils zumindest eine Innenlaufbahn (15, 16) sowie an dem Innenteil (10) jeweils wenigstens eine Außenlaufbahn (13, 14) für die Wälzkörper (11) einer Reihe ausgebildet ist, **dadurch gekennzeichnet, dass** ein Verhältnis von Durchmesser ($T_K$) Teilkreis zumindest einer Reihe der Radlagereinheit (1, 4) zum Durchmesser ($d_k$) der Wälzkörper (11) der jeweiligen Reihe größer als der Zahlenwert Sechs ist, wobei der Teilkreis ein gedachter und zur Rotationsachse (1 a, 4a) der Radlagereinheit (1, 4) konzentrischer Kreis ist, der die Zentren der Wälzkörper (11) einer Reihe umfangsseitig miteinander verbindet.

**2.** Radlagereinheit nach Anspruch 1, **dadurch gekennzeichnet, dass** der Reihenabstand ($r_L$) zwischen den Reihen mindestens dem 1,22

- fachen des Durchmessers ($d_k$) der Wälzkörper (11) entspricht, wobei der Reihenabstand ($r_L$) der mit der Rotationsachse (1a, 4a) gleichgerichtete axiale Abstand ($r_L$) zwischen den Zentren der Wälzkörper (11) ist.

**3.** Radlagereinheit nach Anspruch 1, **dadurch gekennzeichnet, dass** die axiale Lagerbreite ($b_L$) des Außenteiles (8, 21) mindestens dem Dreifachen des Durchmessers ($d_k$) der kleinsten Wälzkörper (11) der Radlagereinheit (1, 4) ist, wobei die axiale Lagerbreite ($b_L$) der mit der Rotationsachse (1 a, 4a) gleichgerichtete maximale Abstand ($b_L$) zwischen zwei axial am weitesten voneinander entfernten Außenkonturpunkten des Außenteiles (8, 21) ist.

**4.** Radlagereinheit nach Anspruch 1, **dadurch gekennzeichnet, dass** der Lagerquerschnitt mindestens dem 1,5 - fachen des Durchmessers ($d_k$) der kleinsten Wälzkörper (11) der Radlagereinheit (1, 4) entspricht, wobei der Lagerquerschnitt ($q_L$) der quer zur Rotationsachse (1a, 4a) gerichtete radiale Abstand ($q_L$) ist, der sich aus einer Differenz aus kleinster Außenabmessung des Außenteils (8, 21) und aus freier Innendurchmesser der Lagerbohrung ($d_L$) ergibt und wobei die kleinste Außenabmessung der radiale Abstand zwischen zwei sich an der Rotationsachse in einer gedachten und durch die Zentren der Wälzkörper verlaufenden Radialebene gegenüberliegenden Punkten der Außenkontur ist.

**5.** Radlagereinheit nach Anspruch 1, 2, 3, oder 4, für eine Radlagereinheit mit einer Radnabe (2), wobei die Radnabe (2) eine radial nach innen in Richtung der Rotationsachse (1a, 4a) hervorstehende Innenverzahnung (3) für einen Eingriff in eine Außenverzahnung an einem Antriebszapfen aufweist und rotationsfest mit der Außenlaufbahn zumindest gekoppelt ist, **dadurch gekennzeichnet, dass** der Durchmesser ($d_Z$) des Kopfkreises der Innenverzahnung (3) mindestens genauso groß ist wie die axiale Lagerbreite ($b_L$) des Außenteiles (8), wobei die axiale Lagerbreite ($b_L$) der mit der Rotationsachse (1a, 4a) gleichgerichtete maximale Abstand ($b_L$) zwischen zwei axial am weitesten voneinander entfernten Außenkonturpunkten des Außenteiles (8) ist.

| | 1 | 2 | 3 | 4 | 5 | 6 | 7 | 8 | | | | | | |
|---|---|---|---|---|---|---|---|---|---|---|---|---|---|---|
| 1 | $d_L$ [mm] | $d_Z$ [mm] | $d_K$ [mm] | $b_L$ [mm] | $r_L$ [mm] | $q_L$ [mm] | $T_k$ [mm] | $d_L / b_L$ | $d_L / d_K$ | $d_L / r_L$ | $d_L / q_L$ | $d_Z / b_L$ | $b_L / q_L$ |
| 2 | 62 | 42 | 11,112 | 40,45 | 16 | 20 | 80,4 | 1,5 | 5,6 | 3,9 | 3,1 | $>1$ | 3,9 |

Fig. 1

1
17
$b_L$
11
$r_L$
15
$P_1$
16
8
12
11
9
$q_L$
13
14
$d_K$
$D_A$
$d_Z$
$d_L$
$T_K$
6,10
7,10
$\alpha_0$
1a
3
2
E
$P_2$

Fig. 2

P1
bL
rL
4
22
24
21
22
11
11
19,10
qL
dK
20
DA
dL
TK
18
4a
5
rE
P2


Fig. 3

Europäisches Patentamt

# EUROPÄISCHER RECHERCHENBERICHT

Nummer der Anmeldung
EP 05 00 4778

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y<br>A | US 2004/171428 A1 (TAJIMA EIJI ET AL) 2. September 2004 (2004-09-02)<br>* Absatz [0128] - Absatz [0139]; Abbildungen 5-14,41 * | 1-4<br>5 | F16C19/18<br>B60B27/00 |
| Y | DE 102 50 459 A1 (FAG KUGELFISCHER AG) 13. Mai 2004 (2004-05-13)<br>* Absatz [0008]; Anspruch 1; Abbildung 2 * | 1-4 | |
| Y | US 6 367 980 B1 (KOBAYASHI UMEMITSU) 9. April 2002 (2002-04-09)<br>* Spalte 4, Zeile 23 - Spalte 6, Zeile 6; Abbildung 1 * | 1-4 | |
| A | US 6 273 230 B1 (NAKANO YUJI ET AL) 14. August 2001 (2001-08-14)<br>* Abbildungen 1,2; Tabelle 1 * | 1 | |

RECHERCHIERTE SACHGEBIETE (Int.Cl.7)
F16C
B60B

Der vorliegende Recherchenbericht wurde für alle Patentansprüche erstellt

| Recherchenort | Abschlußdatum der Recherche | Prüfer |
|---|---|---|
| München | 20. September 2005 | Fischbach, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 05 00 4778

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2005

| Im Recherchenbericht angeführtes Patentdokument | Datum der Veröffentlichung | Mitglied(er) der Patentfamilie | Datum der Veröffentlichung |
|---|---|---|---|
| US 2004171428 A1 | 02-09-2004 | KEINE | |
| DE 10250459 A1 | 13-05-2004 | WO 2004040026 A2 | 13-05-2004 |
| | | EP 1556524 A2 | 27-07-2005 |
| US 6367980 B1 | 09-04-2002 | JP 2000329143 A | 28-11-2000 |
| US 6273230 B1 | 14-08-2001 | DE 19962191 A1 | 28-09-2000 |
| | | JP 2000240663 A | 05-09-2000 |

EPO FORM P0461

Für nähere Einzelheiten zu diesem Anhang : siehe Amtsblatt des Europäischen Patentamts, Nr.12/82